# EUROPEAN PATENT APPLICATION

(11) **EP 3 399 388 A1**
(43) Date of publication of application: **07.11.2018**
(21) Application number: 15911823.1
(22) Date of filing: 30.12.2015
(51) Int. Cl.: G06F 3/01, G06F 3/0488

(54) **HEAD-MOUNTED DISPLAY APPARATUS, HEAD-MOUNTED DISPLAY SYSTEM, AND INPUT METHOD**

(71) Applicant: Shenzhen Royole Technologies Co., Ltd., Shenzhen, Guangdong 518052 (CN)
(72) Inventor: FU, Yang, Guangdong 518052 (CN)
(74) Representative: Hamer, Christopher K.
(86) International application number: PCT/CN2015/099878
(87) International publication number: WO 2017/113194

(57) **Abstract**

The present invention discloses an input method of a head-mounted display device, for using an external input device as an input device, the method comprises steps: controlling a display apparatus of a wearable display device to display a virtual input interface; and controlling to display a virtual image for an operation object at a corresponding position of the virtual input interface according to positional information of the operation object with respect to the input device. The present invention further provides a head-mounted display device and a head mounted system. The head-mounted display device, the head-mounted display system, and the input method of the present invention can generate an input prompt interface via the head-mounted display device when a user wears the head-mounted display device and uses an external touch device at the same time, which is convenient for the user to use.

## Description

### TECHNICAL FIELD

This disclosure relates to display devices, and more particularly relates to a head-mounted display device, a head-mounted display system and an input method.

### BACKGROUND

Currently, the head-mounted display device generally includes a display apparatus and an earphone apparatus. The display apparatus is configured to output display images. The earphone apparatus is configured to output sound. Commonly, when the head-mounted display device is worn by a wearer, the wearer can only see the display images outputted by the display apparatus and cannot see the outside world. In particular, when the wearer needs an additional input device for auxiliary control, since the wearer cannot see the outside world after wearing the head-mounted display device, the wearer can only grope the input device and tentatively input on the input device by hand, which causes inconvenience.

### SUMMARY

The embodiment of the present invention discloses a head-mounted display device, a head-mounted display system, and an input method. When a user wears the head-mounted display device, an input device and an operation object may be virtually displayed on the head-mounted display device according to an actual position relationship, for the user using the operation object to operate the input device for reference, to facilitate the user's usage.

Embodiments of the invention provide a head-mounted display device, comprising a display apparatus configured to couple to an input device and a processor. The processor controls the display apparatus to display a virtual input interface, and further display a virtual image for an operation object at a corresponding position of the virtual input interface according to a positional information of the operation object with respect to the input device detected by the input device.

Embodiments of the invention provide a head-mounted display system, comprising the above head-mounted display device and an input device configured for the head-mounted display device. Therein, the input device comprises a detection unit for detecting a position of the operation object.

Embodiments of the invention provide a head-mounted display system, comprising the above head-mounted display device and an input device configured for the head-mounted display device. Therein, the two positioning units are respectively disposed at two end points on a diagonal of the input device.

Embodiments of the invention provide an input method of a head-mounted display device, for using an external input device as an input device, wherein, the method comprises steps: controlling a display apparatus of a wearable display device to display a virtual input interface; and controlling to display a virtual image for an operation object at a corresponding position of the virtual input interface according to a positional information of the operation object with respect to the input device.

The head-mounted display device, the head-mounted display system, and the input method of the present invention can generate an input prompt interface through the head-mounted display device when the user wears the head-mounted display device and uses an external touch device at the same time, which is convenient for the user to use.

### BRIEF DESCRIPTION OF THE DRAWINGS

To describe the technology solutions in the embodiments of the present invention more clearly, the following briefly introduces the accompanying drawings required in the embodiments. Obviously, the accompanying drawings in the following description show merely some embodiments of the present invention. Those of ordinary skilled in the art may also derive other obvious variations based on these accompanying drawings without creative efforts.
FIG. 1 is a stereo schematic view of an embodiment of the present invention of a head-mounted display system including a head-mounted display device and an input device.
FIG. 2 is a block diagram of an embodiment of the present invention of the head-mounted display device and the input device;
FIG. 3 is a schematic diagram of an embodiment of the present invention of a virtual input interface displayed on a display apparatus of the head-mounted display device;
FIGS. 4-6 are schematic diagrams of an embodiment of the present invention of a change of a transparency of a virtual image of an operation object in the virtual input interface;
FIG. 7 is a schematic diagram of an embodiment of the present invention of the input device with a corresponding placement angle displayed by the display apparatus of the head-mounted display device;
FIG. 8 is a flowchart of an embodiment of the present invention of an input method of the head-mounted display device.

### DETAILED DESCRIPTION

The technology solutions in the embodiments of the present invention will be described clearly and completely hereinafter with reference to the accompanying drawings in the embodiments of the present invention. Obviously, the described embodiments are merely some but not all the embodiments of the present invention. All other embodiments obtained by a person of ordinary skilled in the art based on the embodiments of the present invention without creative efforts shall fall within the protection scope of the present invention.

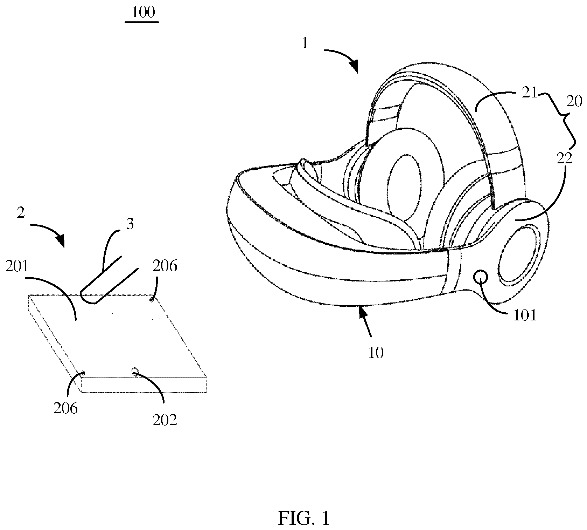

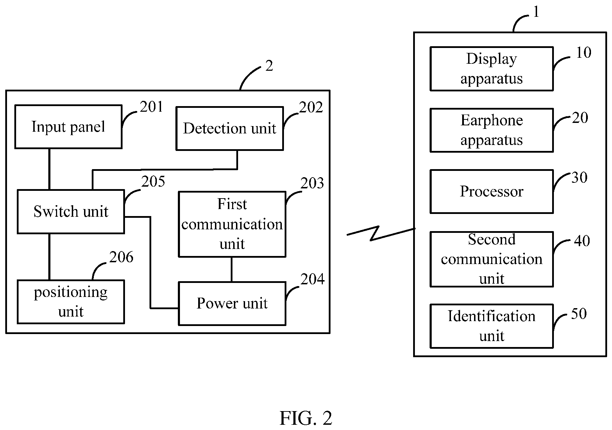

Referring to FIGS. 1 and 2 together, FIG. 1 is a stereo schematic view of an embodiment of the present invention of a head-mounted display system 100. The head-mounted display system 100 includes a head-mounted display device 1 and an input device 2. The head-mounted display device 1 includes a display apparatus 10 and an earphone apparatus 20. The display apparatus 10 is configured to provide display images. The earphone apparatus is configured to provide sound. The display apparatus 10 include a front surface facing a user, and a back surface opposite to the user. After the user wears the head-mounted display device 1, the user watches the images through the light exiting from the front surface. The back surface of the display apparatus 10 is made of opaque materials.

The input device 2 includes an input panel 201 and a detection unit 202. The input panel 201 is configured to receive input operations of an operation object 3 and generate input signals. The detection unit 202 is configured to detect a positional information of the operation object 3 with respect to the input device 2. Therein, the positional information of the operation object 3 includes a coordinate position of the operation object 3 projecting on the input panel 201 of the input device 2, and/or a vertical distance between the operation object 3 and the input panel 201 of the input device 2.

In this embodiment, the input device 2 can be a touch input device. The input panel 201 can be a capacitive touch pad, a resistive touch pad, a surface acoustic touch pad, or the like. The operation object 3 can be a touch pen or a finger. The detection unit 202 can be a distance sensor, an infrared sensor, an image sensor, located on one side edge of the input device 2. When the operation object 3 closes to the input device 2, the detection unit 202 detects a distance and an orientation of the operation object 3, the vertical distance between the operation object 3 and the input panel 201 of the input device 2, and the coordinate position of the operation object 3 projecting on the input panel 201 of the input device 2 are thus obtained. In this embodiment, the coordinate position is a XY coordinate position. A plane defined by the XY coordinate is parallel to a touch surface of the input panel 201.

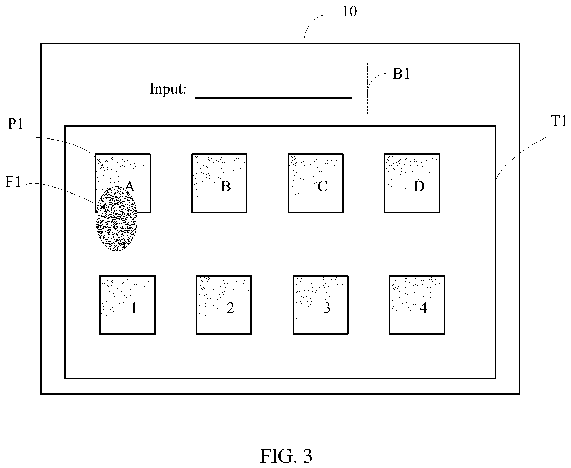

As shown in FIG. 2, the head-mounted display device 1 further includes a processor 30. The processor 30 is configured to control the display apparatus 10 to display a virtual input interface T1 as shown in FIG. 3 when the input device 2 is activated. The processor 30 displays a virtual image F1 for the operation object 3 on a corresponding position of the virtual input interface T1 according to the positional information of the operation object 3 with respect to the input device 2 detected by the detection unit 202. Therein, the position of the virtual image for the operation object 3 displayed on the virtual input interface T1 is determined by the coordinate position of the operation object 3 projecting on the input panel 201 of the input device 2. That is, the processor 30 determines the position of virtual image for the operation object 3 with respect to the virtual input interface T1 according to the coordinate position of the operation object 3 projecting on the input panel 201 of the input device 2, and controls to display the virtual image for the operation object 2 on the corresponding position of the virtual input interface T1.

Therefore, when the user wears the head-mounted display device 1 and uses the input device 2 simultaneously, the head-mounted display device 1 can display the virtual input interface T1 corresponding to the input device 2, and further display the position of the virtual image for the operation object 3 on the virtual input interface T1, for prompting the position of the operation object 3 with respect to the input device 2, which is convenient for the user to input.

Therein, the processor 30 updates the display position of the virtual image for the operation object 3 on the virtual input interface T1 in real time according to the change of the positional information of the operation object 3 with respect to the input device 2 detected by the detection unit 202.

Therein, a detection range of the detection unit 202 is greater than a physical area of the input panel 201. When the operation object 3 falls into the detection range, the processor 30 then controls the display apparatus 10 to display the virtual image F1 for the operation object 3 on the corresponding position of the virtual input interface T1.

Therein, the virtual input interface T1 includes a number of character buttons and/or function icons PI, such as, up, down, left, right or the like. The display position of each function icon P1 on the virtual input interface T1 and the position of the input panel 201 of the input device 2 are one-to-one mapping. When the operation object 3 touches a certain position of the input panel 201 (for example, the position corresponding to the function icon PI), the input panel 201 is triggered to generate input signals corresponding to the function icon P1. At this time, the virtual image for the operation object 3 is displayed synchronously on the position corresponding to the function icon P1 of the virtual input interface T1. The processor 30 receives the input signals and performs the corresponding functions.

Therein, as shown in FIG. 3, the processor 30 further controls the display apparatus 10 to display an input box B1 outside the virtual input interface T1, and to display content, such as, the selected character, inputted by the user in the input box B1 for prompting the user the character has been input currently.

The processor 30 controls to change a transparency of the virtual image for the operation object 3 according to the vertical distance between the operation object 3 and the input panel 201 of the input device 2 of the positional information of the operation object 3.

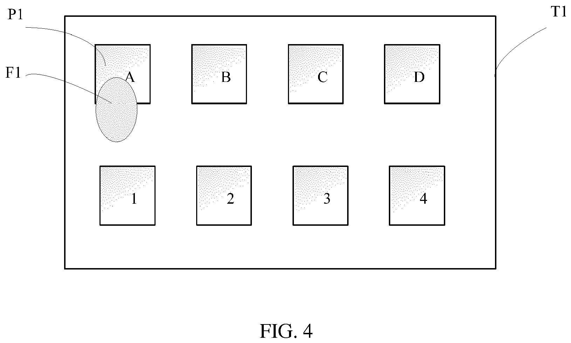

As shown in FIG. 4, in one embodiment, the processor 30 controls the virtual image for the operation object 3 to display with a first transparency when the vertical distance between the operation object 3 and the input panel 201 of the input device 2 is greater than a first default distance, for example, 10 cm.

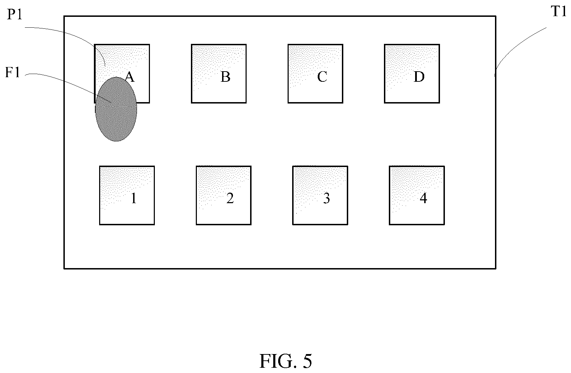

As shown in FIG. 5,, the processor 30 controls the virtual image for the operation object 3 to display with a second transparency which is less than the first transparency when the vertical distance between the operation object 3 and the input panel 201 of the input device 2 is less than the first default distance, and greater than a second default distance, for example, 1 cm.

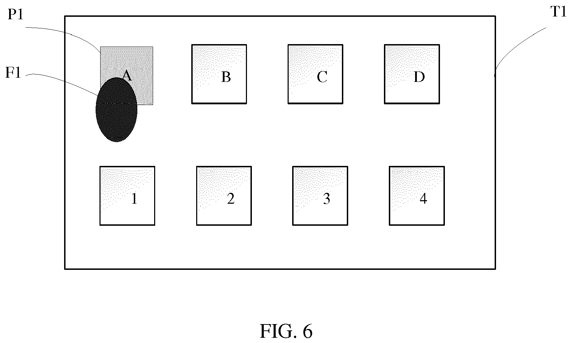

As shown in FIG. 6, the processor 30 controls the virtual image for the operation object 3 to display with a third transparency which is less than the second transparency when the vertical distance between the operation object 3 and the input panel 201 of the input device 2 is less than the second default distance.

Therefore, when the vertical distance between the operation object 3 and the input panel 201 is closer, the transparency of the virtual image for the operation object 3 is lower, that is, less transparent. When the vertical distance between the object 3 and the input panel 201 is farther, the transparency of the virtual image of the object 3 is higher, that is, more transparent. Therefore, by changing the transparency of the virtual image for the operation object 3, the user is prompted for the currently vertical distance between the operation object 3 and the input panel 201, so that when the user selects a function icon and presses the function icon, the distance from the input panel 201 can be knew, and whether the input panel 201 is approaching or not is thus knew, which further facilitates the user to operate.

It is understood that, the distance between the operation object 3 and the input panel 201 and the transparency of the virtual image may be also a linear relationship, that is, the transparency gradually changes according to the change of the distance, so as to provide a more intuitive feeling. In addition, the determination of the distance between the operation object 3 and the input panel 201 can also be achieved by changing a color of the virtual image, such as gradual transition from light to dark, or gradual transition from one color to another color, depends on the increase of the distance. In addition, the determination of the distance between the operation object 3 and the input panel 201 can also be achieved by changing a size of the virtual image, for example, the shorter the distance, the larger the virtual image.

Therein, as shown in FIG. 6, when the operation object 3 is in contact with the input panel 201, the processor 30 controls to change the color of the function icon P1 corresponding to the position of the virtual image F1 for the operation object 3 in the virtual input interface T1. For example, darker colors or other colors. Thereby the user is prompted that the function icon P1 was operated successfully. For example, when the virtual image of operation object 3 is located at the position of the character "A" of the virtual input interface T1, and the processor 30 determines that the vertical distance between the operation object 3 and the input panel 201 is zero according to the positional information of the operation object 3, it is determined that the operation object 3 is in contact with the input panel 201 at the corresponding position, the processor 30 thus controls to change the color of the character "A".

It is understood that the input panel 201 can also be a touch screen, which itself can sense the touch operation of the operation object 3 on the surface thereof, thereby a touch signal is generated. The touch screen can make up for the lack of sensing accuracy of the detection unit 202 on the input device 2 (for example, the detection unit 202 is not easy to obtain a more accurate coordinate position due to a reception angle problem when the operation object 3 is very close to the input panel 201).

Therein, as shown in FIG. 2, the input device 2 further includes a first communication unit 203. The head-mounted display device 1 further includes a second communication unit 40. The first communication unit 202 is configured to communicate with the second communication unit 40. The detection unit 202 detects the positional information of the operation object 3 and transmits the positional information to the head-mounted display device 1 through the first communication unit 203 and the second communication unit 40. Therein, the first communication unit 203 and the second communication unit 40 can be a WIFI communication module, a Bluetooth communication module, a Radio Frequency module, a Near Field Communication module, or the like.

Therein, the processor 30 further responds to an operation of activating an external input device 2, and sends an activated command to the input device 2 through the second communication unit 40, so as to control the input device 2 to be activated. In detail, as shown in FIG. 2, the input device 2 further includes a power unit 204 and a switch unit 205. The first communication unit 203 always connects to the power unit 204 so that the first communication unit 203 is in a working state. The input panel 201, the detection unit 202 and other functional components are connected to the power unit 204 through the switch unit 205. The switch unit 205 can be a numerical control switch and is initially turned off. When receiving a turn-on instruction, the second communication unit 40 controls the switch unit 205 to be turned on, so that the power unit 204 is electrically coupled to the input panel 201, the detection unit 202 and the like, so as to power the input panel 201, the detection unit 202 and the like. At this time, input device 2 is turned on.

Therein, as shown in FIG. 1, the head-mounted display device 1 disposes an external input activation button 101. The operation of activating the external input device 2 may be an operation of pressing the external input activation button 101. In one embodiment, as shown in FIG. 1, the external input activation button 101 is disposed on the earphone apparatus 20. Obviously, in other embodiments, the external input activation button 101 may be also disposed on the display apparatus 10.

Therein, when the operation object 3 operates the input panel 201 of the input device 2, the input panel 201 of the input device 2 generates input signals, the processor 30 receives the input signals through the first communication unit 203 and the second communication unit 40, and controls to implement the corresponding function.

The connection shown in FIG. 2 is circuit connections in the input device 2, and data connection relationships are not shown.

As shown in FIGS. 1 and 2, the input device 2 further includes a number of positioning units 206. The head-mounted display device 1 further includes an identification unit 50. In this embodiment, the input device 2 includes two positioning units 206, respectively located on two end points on a diagonal of the input device 2. Each positioning unit 206 is configured to locate its own position and generate positional information including a coordinate of the positioning unit 206. The identification unit 50 is configured to receive the positional information.

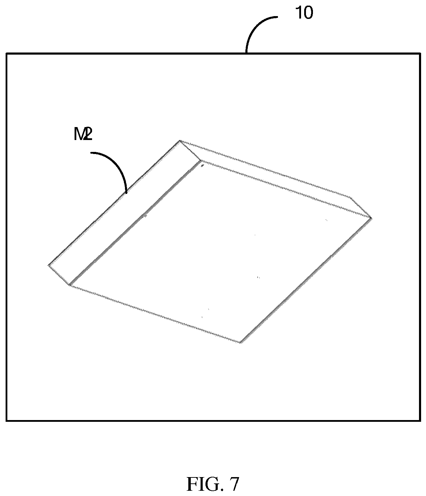

Referring to FIG. 7, in one embodiment, the processor 30 determines three-dimensional coordinates of the two endpoints on the diagonal of the input device 2 according to the received positional information, and generates a contour of the input device according to the coordinates of the two end points on the diagonal of the input device 2. The processor 30 determines a distance and a placement angle of the input device 2 with respect to the head-mounted display device 1 according to the coordinates of the two endpoints on the diagonal of the input device 2 and generates a simulation image M1 of the input device 2 at the placement angle and the distance.

Before the processor 30 controls to display the virtual input interface T1, the processor 30 controls the display apparatus 10 to display the simulation image M1, so as to prompt the user the placement state of the input device 2 with respect to the head-mounted display device 1.

In this embodiment, the positioning unit 206 is a GPS positioning unit, configured for generating a positional information with its own coordinates through a GPS positioning technology. The identification unit 50 also includes a GPS positioning function for positioning the coordinates of the identification unit 50 itself. The processor 30 is configured to determine the relative position relationship between the input device 2 and the head-mounted display device 1 according to the coordinates of the identification unit 50 and the coordinates of the two positioning units 206, so as to further determine the distance and the placement angle of the input device 2 with respect to the head-mounted display device 1, and generates the simulation image M1 of input device 2 at the placement angle and the distance. The simulation image M1 of the input device 2 is larger when the distance between the input device 2 and the head-mounted display device 1 is closer, and the simulation image M1 of the input device 2 is also smaller when the distance between the input device 2 and the head-mounted display device 1 is farther.

The processor 30 receives the positional information generated by the positioning unit 206 and the coordinates of the identification unit 50 acquired by the identification unit 50 in real time to determine the relative position relationship between the input device 2 and the head-mounted display device 1 in real time, and updates the simulation image M1 of the input device 2 with the corresponding distance and placement angle according to the relative position relationship between the input device 2 and the head-mounted display device 1 in real time. Thus, the processor 30 can control the display apparatus 10 to display a simulated movement according to an actual movement of the input device 2.

The processor 30 controls the display apparatus 10 to switch to display the aforementioned virtual input interface T1 when it is determined that the surface of the input panel 201 of the input device 2 is substantially perpendicular to a viewing direction of the head-mounted display device 1 and the distance between the input device 2 and the head-mounted display device 1 is less than a predetermined distance (for example, 20 cm).

Therein, a protrusion (not shown) may be also set on a back of the input device 2, for the user to confirm a front and the back of the input device 2 by touching.

It is understood that, the number of positioning units 206 may be also three, which are distributed in different positions of the input device 2 to provide more accurate coordinate positions.

As shown in FIG. 1, the earphone apparatus 20 may include an annular belt 21 and two telephone receivers 22 disposed at two ends of the annular belt 21.

The display apparatus 10 includes a micro display (not shown) and an optical module (not shown). The micro display is configured to generate display images. The optical module is configured to project the display images through a preset optical path to the wearer's eyes.

Therein, the processor 30, the second communication unit 40, and the identification unit 50 may be disposed on the display apparatus 10 or the earphone apparatus 20.

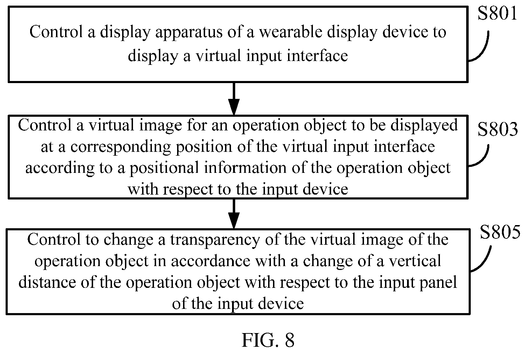

Please refer to FIG. 8, which is a flowchart of an input method of the wearable display device 1 according to an embodiment of the present invention. The order of the steps included in the method may be arbitrarily replaced without being limited to the order in the flowchart. The method includes the steps of:

The processor 30 controls the display apparatus 10 of the wearable display device 1 to display a virtual input interface T1 (S801).

The processor 30 controls to display a virtual image F1 for the operation object 3 at a corresponding position of the virtual input interface T1 according to a positional information of the operation object 3 with respect to the input device 2 (S803). Therein, The positional information of the operation object 3 with respect to the input device 2 includes a coordinate position of the operation object 3 projecting on the input panel 201 of the input device 2. The position of the virtual image for the operation object 3 displayed on the virtual input interface T1 is determined by the coordinate position of the operation object 3 projecting on the input panel 201 of the input device 2.

The processor 30 controls to change a transparency of the virtual image of the operation object 3 in accordance with a change of a vertical distance of the operation object 3 with respect to the input panel 201 of the input device 2 (S805). Therein, when the processor 30 determines that the vertical distance between the operation object 3 and the input panel 201 of the input device 2 is greater than the first default distance, the processor 30 controls to display the virtual image for the operation object 3 with a first transparency. When the vertical distance between the operation object 3 and the input panel 201 of the input device 2 is determined to be less than the first default distance and greater than a second default distance, the virtual image for the operation object 3 is controlled to be displayed with a second transparency lower than the first transparency. When the vertical distance between the operation object 3 and the input panel 201 of the input device 2 is determined to be less than the second default distance, the virtual image for the operation object 3 is controlled to be displayed with a third transparency lower than the second transparency.

Therein, the method further includes the step: the processor 30 also responds to an operation of activating an external input device 2, and sends an activated instruction to the input device 2 to control the input device 2 to be activated.

Therein, the method further includes the step: the processor 30 further controls the display apparatus 10 to display an input box B1 outside the virtual input interface T1 and to display the character selected by the user in the input box B1 to prompt the user that the character has been input currently.

Therein, the method further includes the step: the processor 30 controls to change the color of the function icon P1 corresponding to the virtual image F1 for the operation object 3 in the virtual input interface T1 when the operation object 3 is in contact with the input panel 201.

Therein, the method further includes the step: the processor 30 determines the three-dimensional coordinates of the two endpoints on the diagonal of the input device 2 according to the received positional information and generates a rectangular contour of the input device according to the coordinates of the two endpoints on the diagonal of the input device 2, the processor 30 determines the distance and the placement angle of the input device 2 with respect to the head-mounted display device 1 according to the coordinates of the two endpoints on the diagonal of the input device 2 and generates the simulation image of the input device 2 at the placement angle and the distance.

The above is a preferred embodiment of the present invention, and it should be noted that those skilled in the art may make some improvements and modifications without departing from the principle of the present invention, and these improvements and modifications also the protection scope of the present invention.

## Claims

1. A head-mounted display device, comprising a display apparatus configured to couple to an input device, wherein, the head-mounted display device further comprises a processor, the processor controls the display apparatus to display a virtual input interface, and display a virtual image for an operation object at a corresponding position of the virtual input interface according to a positional information of the operation object with respect to the input device detected by the input device.

2. The head-mounted display device according to claim 1, wherein the positional information comprises a coordinate position where the operation object projects on an input panel of the input device, and a position of the virtual image for the operation object displayed on the virtual input interface is determined by the coordinate position of the operation object projecting on the input panel of the input device.

3. The head-mounted display device according to claim 1, wherein the positional information comprises a vertical distance between the operation object and an input panel of the input device, and the processor controls to change a transparency of the virtual image for the operation object according to a change of the vertical distance between the operation object and the input panel of the input device.

4. The head-mounted display device according to claim 3, wherein, the processor controls to display the virtual image for the operation object with a first transparency when the processor determines that the vertical distance between the operation object and the input panel of the input device is greater than a first default distance; the processor controls to display the virtual image for the operation object with a second transparency less than the first transparency when the vertical distance between the object and the input device is less than the first default distance and greater than a second default distance; the processor controls to display the virtual image for the operation object with a third transparency less than the second transparency when the vertical distance between the operation object and the input device is less than the second default distance.

5. The head-mounted display device according to claims 3, wherein the processor controls to change a color of a function icon corresponding to a position of the virtual image for the operation object in the virtual input interface when the operation object and the input device are in contact.

6. The head-mounted display device according to claim 1, wherein the processor controls the display apparatus to display an input box outside the virtual input interface, and displays content input by a user in the input box.

7. The head-mounted display device according to claim 1, wherein the head-mounted display device further comprises a communication unit, and the processor further responds an operation of activating an external input device, and sends an activated instruction to the input device through the communication unit, and controls the input device to be activated.

8. The head-mounted display device according to claim 7, wherein the processor further receives an input signal generated by the input device in response to operation of the operation object through the communication unit, and controls to implement a corresponding function.

9. The head-mounted display device according to claim 1, wherein the head-mounted display device further comprises an identification unit, configured to receive coordinate positions of two positioning units on the input device, the processor determines a contour of the input device and a distance and a placement angle of the input device with respect to the head-mounted display device according to the coordinate positions of the two positioning units, and generates a simulation image of the input device at the placement angle and the distance.

10. A head-mounted display system, comprising a head-mounted display device according to any one of claims 1-9, and an input device configured for the head-mounted display device, wherein, the input device comprises a detection unit for detecting a position of the operation object.

11. A head-mounted display system, comprising a head-mounted display device according to claim 9, and an input device configured for the head-mounted display device, wherein, the two positioning units are respectively disposed at two end points on a diagonal of the input device.

12. An input method for a head-mounted display device, for using an external input device as an input device, wherein, the method comprises steps:
controlling a display apparatus of a wearable display device to display a virtual input interface; and
controlling to display a virtual image for an operation object at a corresponding position of the virtual input interface according to a positional information of the operation object with respect to the input device.

13. The input method according to claim 12, wherein, the positional information comprises a coordinate position where the operation object is projecting on an input panel of the input device.

14. The input method according to claim 12, wherein, the positional information comprises a vertical distance between the operation object and an input panel of the input device, and the method further comprises:
controlling to change a transparency of the virtual image for the operation object according to a change of the vertical distance between the operation object and the input panel of the input device.

15. The input method according to claim 14, wherein, the step "controlling to change a transparency of the virtual image for the operation object according to a change of the vertical distance between the operation object and the input panel of the input device" comprises:
controlling to display the virtual image for the operation object with a first transparency when it is determined that the vertical distance between the operation object and the input panel of the input device is greater than a first default distance;
controlling to display the virtual image for the operation object with a second transparency less than the first transparency when the vertical distance between the object and the input device is less than the first default distance and greater than a second default distance; and
controlling to display the virtual image for the operation object with a third transparency less than the second transparency when the vertical distance between the object and the input device is less than the second default distance.

16. The input method according to claim 12, wherein, the method further comprises:
determining a contour of the input device, and a distance and a placement angle of the input device with respect to the head-mounted display device according to coordinate positions received from the input device, and generating a simulation image of the input device at the placement angle and the distance; and
controlling the display apparatus to display the simulation image of the input device at the placement angle and the distance.
